# EUROPEAN PATENT APPLICATION

(11) **EP 3 124 893 A1**
(43) Date of publication of application: **01.02.2017**
(21) Application number: 15769176.7
(22) Date of filing: 17.03.2015
(51) Int. Cl.: F24J 2/24, F24J 2/46

(54) **HEAT-MEDIUM DISCHARGE DEVICE**

(30) Priority: 28.03.2014 JP 2014067615
(71) Applicant: Chiyoda Corporation, Kanagawa 220-8765 (JP)
(72) Inventor: YUASA, Minoru, Yokohama-shi Kanagawa 220-8765 (JP)
(74) Representative: Prüfer & Partner mbB Patentanwälte · Rechtsanwälte
(86) International application number: PCT/JP2015/057819
(87) International publication number: WO 2015/146700

(57) **Abstract**

Provided is a heat-medium discharge device capable of promptly discharging a heat medium from a heat medium channel of a solar heat collection device and decreasing a remaining heat medium amount therein during the heat medium discharge operation when a pump for circulating the heat medium in the heat medium channel is stopped or is under maintenance.

A heat-medium discharge device is connected to an angled pipe (5) serving as a heat medium discharge destination of a heat medium channel (2) through which a heat medium flows in a solar heat collection device (1) and is provided in a connection end (2a). A reverse gas flow prevention portion (31) is provided so that a heat medium flow direction directed toward the angled pipe (5) during a heat medium discharge operation is directed upward and downward. The reverse gas flow prevention portion (31) prevents a gas from flowing reversely in the flow direction inside the heat medium channel (2) from the angled pipe (5) when the heat medium is discharged.

## Description

### Technical Field

The present invention relates to a heat-medium discharge device that discharges a heat medium from a heat medium channel of a solar heat collection device including the heat medium channel used to circulate the heat medium therein.

### Background Art

As an example of a system that realizes the efficient and stable electric power supply using renewable energy, a power generation plant using solar heat can be exemplified (for example, see Patent Literatures 1 and 2).

In the power generation plant using the solar heat, the solar heat is collected by a solar heat collection device, the collected heat is fed to a heat exchanger through a heat medium, water is changed into steam by the heat, and a turbine is driven by the steam to generate electric power.

The heat collected by the solar heat collection device can be stored in a heat storage device through the heat medium. Then, when the stored heat is fed again to the heat exchanger through the heat medium at a time zone such as a night in which solar rays cannot be collected, electric power can be generated. For this reason, electric power can be stably supplied.

As the heat medium used in the power generation plant, synthetic oil is generally used. However, in recent years, there has been an attempt to change the heat medium from the synthetic oil to a molten salt.

When the heat medium is changed from the synthetic oil to the molten salt, following advantages can be obtained.

First, since high-temperature steam can be supplied compared with the related art, power generation efficiency can be improved and power generation cost can be decreased. Further, in the system that uses the molten salt as the heat medium, the capacity of a heat storage tank used in the system can be decreased compared with the related art. Further, since the molten salt is used as a heat storage medium in the related art (the heat medium: synthetic oil), there is a need to exchange heat between the synthetic oil and the molten salt. However, since the entire system is moved only by the molten salt, the heat exchanger is not needed and thus the plant can have a simpler configuration.

### Citation List

### Patent Literature

Patent Literature 1: US 2010/43776 A
Patent Literature 1: JP 2014-31787 A

### Summary of Invention

### Technical Problem

Incidentally, the heat medium channel which circulates the heat medium to the solar heat collection device is configured to circulate the heat medium by a pump. However, there is a case where the heat medium inside the heat medium channel is discharged, for example, for maintenance. Further, the heat medium is circulated in the heat medium channel by the pump. However, when the supply of electric power is interrupted due to a power failure or an accident or the pump is broken, the circulation of the heat medium is stopped. Here, when a molten salt having a congealing point temperature higher than an atmospheric temperature is used as the heat medium, there is a possibility that the heat medium not flowing through the heat medium channel is cooled and solidified in relatively short time. In this case, the heat medium channel is blocked by the solidified heat medium when the operation is resumed. Thus, there is a need to heat the heat medium channel to melt the heat medium. As a result, some time and cost are taken when the operation is resumed.

Further, for example, when the circulation of the heat medium having a low boiling point is stopped at a day time in fine weather, the heat medium inside the solar heat collection device is heated while not flowing therein. As a result, there is concern that the temperature of the heat medium may exceed the boiling point.

Thus, when the pump for circulating the heat medium cannot be operated again after the pump is stopped due to some reasons, it is desirable to discharge the heat medium from the heat medium channel. Further, it is desirable to shorten the discharge time during the discharge operation. Further, it is desirable to decrease the amount of the heat medium remaining inside the heat medium channel.

The invention is made in view of the above-described circumstances and an object of the invention is to provide a heat-medium discharge device capable of promptly discharging a heat medium from a heat medium channel of a solar heat collection device and decreasing a remaining heat medium amount therein during the heat medium discharge operation when a pump for circulating the heat medium in the heat medium channel is stopped or is under maintenance.

### Solution to Problem

In order to solve the above-described problems, according to the invention, there is provided a heat-medium discharge device for discharging a heat medium from a heat medium channel through which the heat medium flows in a solar heat collection device heating the heat medium by solar heat, the heat-medium discharge device including: a reverse gas flowpreventionportion which is provided in a connection end of the heat medium channel connected to a target discharge portion serving as a heat medium discharge destination of the heat medium channel and in which a heat medium flow direction directed toward the target discharge portion during a heat medium discharge operation is directed upward and downward, wherein the heat medium channel has a difference in height causing the heat medium to flow downward from a highest position of the heat medium channel to a highest position of the reverse gas flow prevention portion and is provided with a vent portion provided at a highest portion of the heat medium channel to receive air from an outside of the heat medium channel.

According to such a configuration, since a difference in height causing the heat medium to flow downward is provided from the highest position of the heat medium channel to the highest position of the reverse gas flow prevention portion of the heat medium channel connectionportion, the heatmediumflows downward to the target discharge portion based on the difference in height even when air is accumulated at the high portion of the reverse gas flow prevention portion.

For example, it is possible to prevent a problem in which a gas (air) inside a target discharge portion such as a container, a reservoir, and a pipe enters a connection portion (a heat medium channel connection end) between a heat medium channel and the target discharge portion and flows reversely to the previous heat medium channel. That is, when the air flows into the upward/downward portion of the connection end of the heat medium channel, that is, a height peak portion, the air which is lighter than the heat medium cannot fall downward from that portion and the gas cannot flow reversely in the heat medium channel. Thus, it is possible toprevent aprobleminwhich aheatmediumdischarge time increases when the flow of the heat medium inside the heat medium channel is disturbed by the reversely flowing gas. Further, it is possible to suppress a problem in which the heat medium remains inside the heat medium channel when the flow of the heat medium inside the heat medium channel is disturbed by the entering air.

If the entrance of the gas can be prevented even when a path, for example, an upward inclined portion in which the heat medium rises in the heat medium flow direction during the heat medium discharge operation exists within a range of the difference in height of the heat medium channel, the heat medium can smoothly flow to the target discharge portion.

Thus, when the heat medium is discharged from the heat medium channel, the heat medium is smoothly discharged. Accordingly, it is possible to shorten the heat medium discharge time and to decrease the amount of the heat medium remaining in the heat medium channel during the heat medium discharge operation. Accordingly, it is possible to prevent an increase in cost and time taken for melting a heat medium having a high congealing point temperature when the solar heat collection device is restarted in the state where the heat medium is solidified inside the heat medium channel after the stop of the pump. Further, it is possible to prevent a problem in which a heat medium such as synthetic oil having a relatively low boiling point temperature is overheated beyond the boiling point.

In the above-described configuration of the invention, a plurality of the solar heat collection devices maybe connected to the target discharge portion.

According to such a configuration, since the plurality of heat medium channels are connected to the target discharge portion, there is concern that the air enters the target discharge portion from the heat medium channel having discharged the heat medium compared with the other heat medium channels among the plurality of heat medium channels connected to the target discharge portion during the heat medium discharge operation and the air flows reversely to the heat medium channel not having discharged the heat medium even when the target discharge portion is filled with the heat medium in a normal state. Even in this case, the reverse flow of the air can be prevented by the reverse gas flow prevention portion.

### Advantageous Effects of Invention

According to the invention, since it is possible to smoothly discharge the heat medium from the heat medium channel circulating the heat medium in the solar heat collection device, it is possible to shorten the heat medium discharge time. Further, it is possible to decrease the remaining heat medium amount in the heat medium channel when the heat medium is discharged from the heat medium channel.

### Brief Description of Drawings

Fig. 1 is a schematic diagram illustrating a solar heat collection system including a heat-medium discharge device according to an embodiment of the invention.
Fig. 2 is a schematic diagram illustrating the heat-medium discharge device.

### Description of Embodiments

Hereinafter, an embodiment of the invention will be described with reference to the drawings.

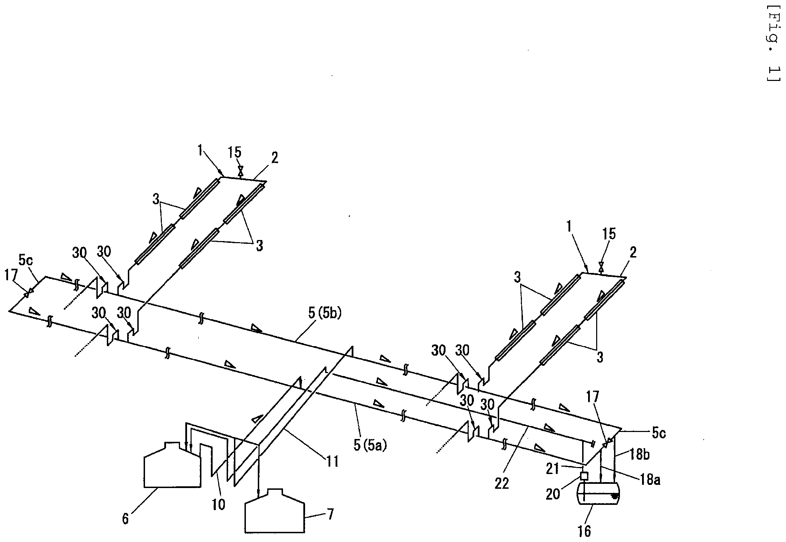

Fig. 1 illustrates a schematic configuration of a solar heat collection system including a heat-medium discharge device 30 of the embodiment. The solar heat collection system illustrated in Fig. 1 includes a plurality of solar heat collection devices 1. Additionally, two solar heat collection devices 1 are depicted in Fig. 1, but a plurality of (for example, one hundred or more) solar heat collection devices 1 are provided. Additionally, the solar heat which is collected by the solar heat collection system is fed to a power generation system through a heat medium to generate electric power. A solar heat power generation plant includes the solar heat collection system and the power generation system.

The solar heat collection device 1 includes a substantially U-shaped heat medium channel 2 and the heat medium channel 2 is heated by solar rays collected by a light collection mirror 3 so that the temperature of a heat medium flowing through the heat medium channel 2 rises to, for example, about 550°C.

Additionally, in the embodiment, a molten salt which is formed by a mixture of sodium nitrate and potassium nitrate is used as the heat medium.

Further, in Fig. 1, a small right angled triangle indicates an inclination symbol and the heat medium channel 2 and an angled pipe 5 to be described later are inclined with respect to the horizontal plane in accordance with the inclination symbol.

The heat medium channel 2 of solar heat collection device 1 is connected to the angled pipe 5. The angled pipe 5 is formed in a loop shape and is formed so that a left end of the angled pipe is higher than a right end thereof in Fig. 1. That is, the angled pipe 5 is inclined rightward and downward with respect to the horizontal plane in Fig. 1. Further, the angled pipe 5 includes two angled pipes 5a and 5b which are disposed in parallel and one angled pipe 5a and the other angled pipe 5b are connected to a pipe 5c at each of both ends.

Two tanks 6 and 7 are connected to the angled pipe 5. The tanks 6 and 7 are respectively used to store the heat medium therein. Here, the tank 6 stores the heat medium which has not been heated by the solar heat collection device 1 and the tank 7 stores the heat medium heated by the solar heat collection device 1. Thus, in the description below, the tank 6 will be referred to as a cold side tank 6 and the tank 7 will be referred to as a hot side tank 7.

The cold side tank 6 is connected to the angled pipe 5a by a connection pipe 10 and the heat medium is fed from the cold side tank 6 to the angled pipe 5a by a pump (not illustrated) provided in the cold side tank 6. The heat medium which is fed to the angled pipe 5a is branched at the connection portion between the connection pipe 10 and the angled pipe 5a, a part of the heat medium flows rightward along the inclination of the angled pipe 5a, and the remaining heat medium flows leftward against the inclination of the angled pipe 5a.

Further, the hot side tank 7 is connected to the angled pipe 5b by a connection pipe 11 and the heat medium heated by the solar heat collection device 1 is fed to the hot side tank 7 by the pressure of the pump. Additionally, the heat medium can be branched from a halfway position of the connection pipe 11 and can be also fed to the cold side tank 6 if necessary. For example, since the heat medium cannot be heated by the solar heat collection device 1 during the night when there is no sunshine, the heat medium is fed only to the cold side tank 6 by a switching valve provided at the branch portion in that case. Accordingly, it is possible to prevent the non-heated heat medium from being fed to the hot side tank 7.

Further, one end of the heat medium channel 2 of the solar heat collection device 1 is connected to the angled pipe 5a and the other end thereof is connected to the angled pipe 5b. Thus, the heat medium which flows through the angled pipe 5a during a normal operation is the heat medium which has not been heated by the solar heat collection device 1 and the heat medium which flows through the angled pipe 5b is the heat medium which is heated by the solar heat collection device 1. In a heat medium channel 2 of each solar heat collection device 1, the heat medium flows from a connection end 2a connected to an angled pipe 5a to a connection end 2a connected to an angled pipe 5b and the heat medium is circulated in the solar heat collection device 1.

Further, a vent portion 15 which introduces air into the heat medium channel 2 during a heat medium discharge operation is provided in the highest position (the highest position in the height direction) of the heat medium channel 2 of each solar heat collection device 1. The vent portion 15 is configured as, for example, a valve or the like. When the valve is opened during the heat medium discharge operation, air is introduced into the heat medium channel 2. Additionally, the valve may be an electromagnetic valve or a manual open/close valve, but an electromagnetic valve which can be opened or closed manually is desirable in order to open the valve when electric power is off.

Further, a drain container 16 is disposed at a position lower than the connection position of the heat medium channel 2 of the solar heat collection device 1 disposed at the lowest position among the plurality of solar heat collection devices 1 and the drain container 16 is connected to the angled pipe 5. Specifically, the drain container 16 is connected to the pipe 5c at the right end of the angled pipe 5.

The valve 17 is provided at the center portion of the pipe 5c, the pipe 5c near the angled pipe 5a in relation to the valve 17 is connected to the drain container 16 by a pipe 18a, and the pipe 5c near the angled pipe 5b in relation to the valve 17 is connected to the drain container 16 by a pipe 18b. Additionally, the valve 17 is normally closed.

Further, a valve (not illustrated) is provided at the connection portion between the pipe 18b and the pipe 5c. Then, when the valve is opened, the heat medium which flows through the angled pipe 5b can be received in the drain container 16 through the pipe 5c and the pipe 18b.

Further, the heat medium which flows through the angled pipe 5a is normally fed to the drain container 16 by the pipes 5c and 18a.

Further, a pump 20 which feeds the heat medium from the drain container 16 to the cold side tank 6 is included. A discharge pipe 21 is connected to the drain container 16 and the pump 20 is provided at a halfway position of the discharge pipe 21.

Meanwhile, a discharge pipe 22 is provided between the angled pipes 5a and 5b to be parallel to the angled pipes 5a and 5b and one end of the discharge pipe 22 is bent toward the cold side tank 6 and is connected to the cold side tank 6. Further, the other end of the discharge pipe 22 is connected to the discharge pipe 21.

Thus, the heat medium which is received in the drain container 16 is fed to the cold side tank 6 through the discharge pipes 21 and 22 by the pump 20 and is stored in the cold side tank 6.

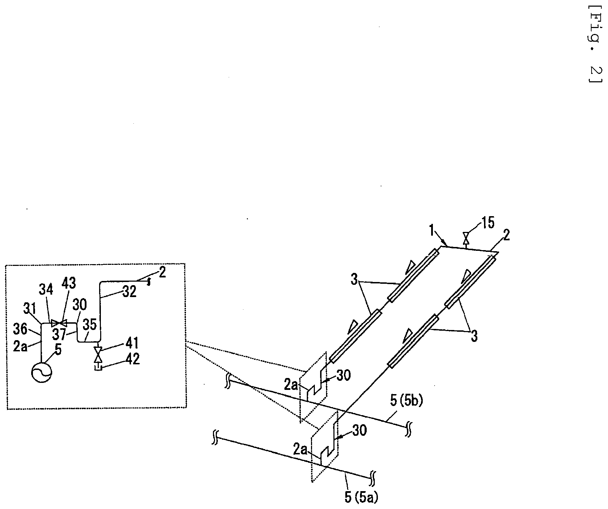

A heat-medium discharge device (a reverse gas flow prevention device) 30 is provided in each of a pair of connection ends 2a connected to the angled pipe 5a and the angled pipe 5b of the heat medium channel 2. As illustrated in Fig. 2, the heat-medium discharge device 30 includes a reverse gas flow prevention portion 31 which is provided at the connection end 2a of the heat medium channel 2.

The reverse gas flow prevention portion 31 is formed by bending a tube body serving as the heat medium channel 2 in a substantially reverse U-shape and has a structure in which the flow direction of the heat medium discharged from the heat medium channel 2 toward the angled pipe 5 serving as a heat medium discharge destination is directed upward and downward. That is, the reverse gas flow prevention portion 31 has a structure with a maximal height. Further, the heat-medium discharge device 30 is provided with an elongated falling portion 32 which is provided at the upstream side in the flow direction in relation to the reverse gas flow prevention portion 31 bent in a substantially reverse U-shape and which is a downward slope having a large difference in height and serving as a part of the heat medium channel 2 in the heat medium flow direction when the heat medium is discharged. The elongated falling portion 32 may be formed to follow the substantially vertical direction.

A difference in height in the elongated falling portion 32 is larger than that of the reverse gas flow prevention portion 31. Further, the height of the upper end of the elongated falling portion 32 is higher than the highest position of the reverse gas flow prevention portion 31. Further, the upper end of the elongated falling portion 32 is continuous to the upstream side of the heat medium flow direction when the heat medium is discharged from the heat medium channel 2. However, the heat medium channel 2 which is located at the upstream side of the elongated falling portion 32 is basically inclined downward from the vent portion 15 toward the elongated falling portion 32. Additionally, even when an upward slope is provided in a part of the heat medium channel 2 located at the upstream side in relation to the elongated falling portion 32, the heat medium can be also caused to flow toward the angled pipe 5.

Further, the shape of the reverse gas flow prevention portion 31 will be described in more detail. The reverse gas flow prevention portion includes a maximum portion 34 which is provided near the angled pipe 5 to have a maximal height at the connection end 2a and a minimum portion 35 which is provided at the opposite side to the angled pipe 5 of the maximum portion 34 to have a minimal height. Further, a falling portion 36 which is inclined downward toward the angled pipe 5 is provided between the maximum portion 34 and the angled pipe 5 and a rising portion 37 which is inclined upward toward the angled pipe 5 is provided between the maximum portion 34 and the minimum portion 35. Further, the elongated falling portion 32 is provided at the opposite side to the angled pipe 5 of the minimum portion 35.

When air (gas) flows from the angled pipe 5 which is a target discharge destination to the heat medium channel 2, the air flows from the angled pipe 5 to the maximum portion 34. However, the air which is lighter than the heat medium cannot fall toward the minimum portion 35 through the heat medium while the heat medium exists inside the heat medium channel 2, and the air is trapped at the maximum portion 34 and the vicinity thereof.

Further, the minimum portion 35 is provided with a drain valve 41 and a drain receiver 42 which prevents the leakage of the drain is provided below a drain port of the drain valve 41. For example, when the heat medium is discharged as below, there is concern that the heat medium may remain in the minimum portion 35 of the heat medium channel 2 and the vicinity thereof. The drain valve 41 is used to discharge the remaining heat medium. The drain valve 41 is normally closed during a normal operation.

The maximum portion 34 is provided with a separation valve 43. The separation valve 43 is a valve which separates the angled pipe 5 which supplies the heat medium to each solar heat collection device 1 and collects the heat medium from the heat medium channel 2 of the solar heat collection device 1. The separation valve is closed when the solar heat collection device 1 is broken or damaged or is under maintenance so that the heat medium channel 2 is interrupted by the angled pipe 5 and thus the flow of the heat medium from the angled pipe 5 to the heat medium channel 2 is suppressed. The separation valve 43 is normally opened during the normal operation.

The height of the maximum portion 34 is higher than the minimumportion 35 and the connection position between the angled pipe 5 and the heat medium channel 2 and is lower than the upper end of the elongated falling portion 32. The minimum portion 35 is higher than the connection position between the angled pipe 5 and the heat medium channel 2 and is lower than the maximum portion 34. Further, the lower ends of the minimum portion 35 and the elongated falling portion 32 are located at the same height position.

In the solar heat collection system including the heat-medium discharge device 30 with such a configuration, the heat medium is fed from the cold side tank 6 to the angled pipe 5a by a pump not illustrated in the drawings during the normal operation. Then, the heat medium is fed from the angled pipe 5a to the heat medium channel 2 of each solar heat collection device 1 and the heat medium which is heated by the solar ray passes through the connection pipe 11 from the angled pipe 5b so that the heat medium is stored in the hot side tank 7. The heat medium which is stored in the hot side tank 7 by a pipe (not illustrated) is fed to the power generation system and generates electric power by a turbine. The heat medium which is used to generate electric power and decreases in temperature is returned to the cold side tank 6 by a pipe (not illustrated) . Then, the heat medium is fed again from the cold side tank 6 to the angled pipe 5b by a pump (not illustrated) and the heat medium is heated by the solar heat collection device 1 as described above. Next, the heated heat medium is stored in the hot side tank 7.

With such steps, the heat medium can be stably supplied to the power generation system. That is, the heat medium which is stored in the hot side tank 7 is sent to a heat exchanger of the power generation system and water is heated into steam. Then, a turbine of the power generation system is rotated to generate electric power. The heat medium which has been used to generate steam in the power generation system and decreases in temperature is returned to the cold side tank 6.

Further, a part of the heat medium which flows through the angled pipe 5a is fed to the drain container 16 through the pipes 5c and 18a, is fed from the drain container 16 to the cold side tank 6 through the discharge pipes 21 and 22 by the pump 20, and is stored in the cold side tank 6.

Meanwhile, for example, when there is concern that the heat medium flowing through the heat medium channel 2 may be solidified due to a decrease in temperature thereof in a maintenance or power failure state, the heat medium is discharged from the heat medium channel 2 in this way.

First, the vent portion 15 which is provided at the highest position of the heat medium channel 2 of each solar heat collection device 1 is opened to introduce air into the heat medium channel 2 and the valve provided at the connection portion between the pipe 18b and the pipe 5c is opened.

Then, the heat medium flows from the heat medium channel 2 of each solar heat collection device 1 into the angled pipe 5 (5a and 5b) by gravity and the heat medium flows through the angled pipe 5 (5a and 5b) by gravity to be received in the drain container 16 through the pipes 18a and 18b.

The heat medium which is received in the drain container 16 is fed to the cold side tank 6 through the discharge pipes 21 and 22 by the pump 20 and is stored in the cold side tank 6.

Thus, when the heat medium is discharged from the plurality of solar heat collection devices 1, the heat medium can be discharged from the solar heat collection device 1 by gravity while the cold side tank 6 is not installed at a position lower than the solar heat collection device 1.

Further, the heat medium flowing through the angled pipe 5 and the heat medium channel 2 is kept at a temperature in which the heating medium is not solidified and the inside of the drain container 16 is kept at a temperature in which the heat medium received in the drain container 16 is not solidified. That is, the flow rate of the heat medium is determined so that the heat medium is not solidified in consideration of the heat radiation amount from the angled pipe 5 and the heat medium channel 2 and the cold side tank 6, the hot side tank 7, and the drain container 16 are kept warm.

Thus, it is possible to receive the heat medium from the heat medium channel 2 of the solar heat collection device 1 into the drain container 16 by gravity without solidifying the heat medium and to feed the heat medium from the drain container 16 to the cold side tank 6 so that the heat medium is stored in the cold side tank 6 while not being solidified therein.

Here, the plurality of solar heat collection devices 1 are connected to the angled pipe 5 as described above. When the heat medium is discharged as described above, the time taken until the heat medium is completely discharged is set to be different by the solar heat collection devices 1. That is, the heat medium discharge end timings of the solar heat collection devices 1 are different due to some factors including the position of the heat medium channel 2, the length of the heat medium channel 2, or the inclination angle of the heat medium channel in each solar heat collection device 1. During the normal operation, the connection portion between the angled pipe 5 and the heat medium channel 2 is filled with the heat medium and the heat medium is caused to flow from the connection end 2a near the angled pipe 5a of the heat medium channel 2 toward the connection end 2a near the angled pipe 5b by the pump. Thus, the air does not flow to the heat medium channel 2 during the normal operation. However, as described above, there is concern that the air may flow from the heat medium channel 2 having discharged the heat medium in the solar heat collection device 1 into the angled pipe 5 when the heat medium is discharged.

In this case, there is concern that the air may flow from the angled pipe 5 toward the heat medium channel 2 not having discharged the heat medium in the solar heat collection device 1. When the air flows reversely to the heat medium channel 2 while the entire heat medium channel 2 is inclined downward from the position of the vent portion 15 of the heat medium channel 2 toward each of the pair of connection ends 2a, the flow rate of the heat medium during the heat medium discharge operation decreases and thus some time is taken until the heat medium is discharged. Further, when a portion which is inclined upward in the heat medium discharge direction exists in a part of a path from the vent portion 15 of the heat medium channel 2 to each connection end 2a, the flow of the heat medium is stopped at that portion when the air flows to that portion. As a result, there is concern that the heat medium may remain at the upstream side when the heat medium is discharged.

In the embodiment, the reverse gas flow prevention portion 31 is provided at the connection end 2a connected to the angled pipe 5 of the heat medium channel 2 and thus the reverse flow of the air is prevented. That is, the reverse gas flow prevention portion 31 is provided with a portion which is inclined upward and downward in the heat medium discharge direction and the portion which is inclined upward and downward is formed as the maximum portion 34. As for the air which flows reversely from the angled pipe 5 to the heat medium channel 2, the air cannot flow reversely toward the upstream side of the heat medium channel 2 unless the air reaches the maximum portion 34 and then moves downward. However, since the air is lighter than the heat medium, the air cannot move downward and thus cannot move toward the upstream side in relation to the vicinity of the maximum portion 34.

Thus, the air does not flow reversely beyond the reverse gas flow prevention portion 31 of the heat medium channel 2. Accordingly, it is possible to smoothly discharge the heat medium and to prevent the heat medium from remaining in the heat medium channel 2.

Further, the elongated falling portion 32 is provided at the upstream side of the reverse gas flow prevention portion 31 and the elongated falling portion 32 has a large difference in height compared with a difference in height of the heat medium channel 2 of the reverse gas flow prevention portion 31. Accordingly, when the heat medium flows downward to the portion having a large difference in height, it is possible to further discharge the heat medium beyond the reverse gas flow prevention portion 31.

Additionally, in the above-described embodiments, an example has been described in which the molten salt formed by the mixture of sodium nitrate and potassium nitrate is used as the heat medium, but the heat medium may be other molten salts or other liquid metals or solutions. Furthermore, the heat medium may be also oil.

### Reference Signs List

- 1:: solar heat collection device
- 2:: heat medium channel
- 2a:: connection end
- 5:: angled pipe (target discharge portion)
- 15:: vent portion
- 30:: heat-medium discharge device
- 31:: reverse gas flow prevention portion

## Claims

1. A heat-medium discharge device for discharging a heat medium from a heat medium channel through which the heat medium flows in a solar heat collection device heating the heat medium by solar heat, the heat-medium discharge device comprising:
a reverse gas flow prevention portion which is provided in a connection end of the heat medium channel connected to a target discharge portion serving as a heat medium discharge destination of the heat medium channel and in which a heat medium flow direction directed toward the target discharge portion during a heat medium discharge operation is directed upward and downward,
wherein the heat medium channel has a difference in height causing the heat medium to flow downward from a highest position of the heat medium channel to a highest position of the reverse gas flow prevention portion and is provided with a vent portion provided at a highest portion of the heat medium channel to receive air from an outside of the heat medium channel.

2. The heat-medium discharge device according to claim 1,
wherein a plurality of the solar heat collection devices are connected to the target discharge portion.
